# EUROPEAN PATENT SPECIFICATION

(11) **EP 4 491 070 B1**
(45) Date of publication and mention of the grant of the patent: **08.07.2026**
(21) Application number: 23185515.6
(22) Date of filing: 14.07.2023
(51) Int. Cl.: A47J 31/36, A47J 31/44, A47J 31/60

(54) **MACHINE, CUTTING UNIT FOR SUCH A MACHINE AND METHOD FOR PREPARING A BEVERAGE WITH SUCH A MACHINE**
MASCHINE, SCHNEIDEINHEIT FÜR SOLCH EINE MASCHINE UND VERFAHREN ZUR ZUBEREITUNG EINES GETRÄNKS MIT SOLCH EINER MASCHINE
MACHINE, UNITÉ DE COUPE POUR UNE TELLE MACHINE ET PROCÉDÉ DE PRÉPARATION D'UNE BOISSON AVEC UNE TELLE MACHINE

(43) Date of publication of application: 15.01.2025
(73) Proprietor: Société des Produits Nestlé S.A., 1800 Vevey (CH)
(72) Inventor: ZIMMER, Johannes, 1012 Lausanne (CH); ABEGGLEN, Daniel, 1091 Grandvaux (CH); HEYDEL, Christophe Sébastien Paul, 2025 Chez Le Bart (CH)
(74) Representative: Rosolen-Delarue, Katell

(56) References cited:
- EP-B1- 2 291 312
- WO-A1-2011/051867
- IT-A1- MI20 101 096
- US-A1- 2003 116 029
- US-A1- 2021 068 580

## Description

### 1. Field of the invention

The present invention is directed to a preparation machine for preparing a beverage, in particular from single-serve capsules. The invention is further directed to a cutting unit for being used in such a preparation machine. The present invention is also directed to a method for preparing a beverage with such a preparation machine. Single-serve capsules generally include a capsule body, which may be made out of plastics or aluminum, and an organic component, like ground coffee, which is contained in the capsule body.

### 2. Technical background

In the field of single-serve capsules there is a general effort to reduce waste and to increase the disposability and recyclability of processed capsules. Usually the processed capsules must be collected at home by the users and brought from time to time to a collecting station like a shop. Then large quantities of processed capsules must be sent from the collecting station to a dedicated plant equipped with large machines which process bulks of processed capsules to separate the capsule bodies from the organic component, e.g. ground coffee. Once separated the organic component and the capsule bodies may be transferred to other plants for further processing and eventually recycling.

However, the whole process is complex and long until the capsule materials, in particular the organic component, may eventually be recycled and/or composted. In particular, it requires the user to carry loads of processed capsules that are relatively heavy and cumbersome all the way to the collecting station. Besides, the capsule body cannot be emptied from the organic component before the processed capsule is disposed of in a trash bin at home. It is not possible for the user to compost and recycle at home the used organic components.

IT MI 20101096 A1 discloses a device for separating components of beverage capsules and their contents, after use. It comprises a unit for opening the capsule body such that its contents can be removed therefrom.

US 2021068580 A1 discloses a beverage machine having built-in recycling station for opening, emptying and storing emptied capsules. The set-up and construction of the capsule-recycling station is very complex and bulky as it comprises a used capsule picking and moving device connected to an actuation device, and having:
- a carriage for transferring a used capsule from its beverage extraction position, to
- a first opening position where the capsule is opened, then to
- a second position where its contents is removed, and then
- a third position where the capsule is piled up to a storage area ("emptied capsules collection device") for used and emptied capsules.

Document WO 2011051867 A1 discloses a machine for producing and dispensing beverages, comprising a beverage preparation unit and a separating device. The separating device is designed to cut open used capsules so that the used contents can move out, and is further designed to compress the emptied capsules, which are then stored in a dedicated tank.

The capsule-ingredient separating unit disclosed in the available prior art however do not allow to open the capsule body sufficiently to let the ingredient out. There is a need to improve the capsule cutting such that most or all of the ingredient can be removed from the capsule body.

### 3. Summary

It is thus an aspect of the present disclosure to provide a preparation machine for preparing a beverage according to claim 1.

Thus, the processed capsule can be cut by the cutting element(s) to release most or all of the used beverage component from the cavity. The cutting element can cut through the capsule body to cut the capsule open. The capsule body may be opened and, preferably, separated in two pieces when the capsule is cut. The cavity can thus be emptied and the beverage component separated from the opened capsule body. Handling the released beverage component and the opened capsule body can be more efficient, which enhances the compostability and the recyclability.

In the present disclosure, the term "capsule" may be understood as designating any container that contains a dose of beverage component(s), for example a pod or a cartridge. Such dose of beverage component(s) is usually suitable for preparing one beverage (single-serve), two or a few beverages. A capsule may include an inner wall arranged to divide the cavity into two or more sub-cavities for respectively containing as many beverage components. To enhance the separation of the capsule body from the released beverage component, the capsule may comprise a filter bag for enclosing the beverage component; thus, the beverage component may easily detach as a whole from the capsule body. The preparation machine may be configured to process capsules of a given shape, for example symmetrical, frustoconical, spheroidal, etc.

The preparation machine enables to efficiently handle the released beverage component separately from the opened capsule body, which enhances the disposability and recyclability of processed capsules. Further, the user can have the beverage component composted e.g. at home, and the user is only required to dispose of the opened capsule body, hence a relatively light and compact load.

As the cutting unit is part of the preparation machine, it provides an all-in-one compact equipment for processing the capsules and enhancing their disposability and recyclability. Moreover, the cutting unit may be added into the preparation machine, thus allowing retrofitting the existing preparation machines.

The beverage component may be selected within the list of: roast and ground coffee, a soluble ingredient such as milk-based, chocolate, soup, infusion or herbal tea ingredients as well as nutritional soluble compositions, and more generally any liquid edible composition for human or animal consumption and/or mixtures thereof.

The fluid may be water or milk. During preparation of a beverage, the beverage component may be made to interact with the fluid injected in the capsule in order to produce any ingestible substance, for example coffee, tea, milk, cream, soup, puree, medication, etc.

In an implementation, the cutting unit may have a counter-wall arranged opposite the cutting element. Thus, the counter-wall can keep the capsule in contact with the cutting element while the capsule is being cut by the cutting element.

In an implementation, the preparation machine may further comprise a deformation unit having a deformation element, the deformation element being movable to deform the cut capsule so as to enhance release of the beverage component from the cavity after the capsule has been processed in the preparation unit. Preferably, the deformation element may comprise a piston arranged to deform the cut capsule, so as to enhance the releasing of the beverage component from the cavity. The deformation unit may be located below, preferably under, the preparation unit.

According to an embodiment, the cutting element may comprise a blade.

The blade may comprise one or more sharp portions of a rigid material, like a metal. According to an embodiment, the preparation machine may further comprise a driving unit configured to move the cutting element to cut open the capsule, the driving unit including a motor or a manual actuator.

Thus, the driving unit can transmit a mechanical force to the cutting element, which can in turn cut the capsule open.

In an implementation, the driving unit may further comprise a mechanism configured to transmit a mechanical force from the motor or the manual actuator to the cutting element.

In an implementation, the motor may be electrically connected to the preparation unit such that the motor is powered by the same source as the preparation unit.

In an implementation, the motor may be also coupled to the preparation unit so as to displace a movable chamber section and selectively close the preparation chamber.

In an implementation, the manual actuator may be a crank or a lever, the crank or lever being coupled to the preparation unit so as to displace a movable chamber section and selectively close the preparation chamber.

Alternatively to this embodiment, the cutting element may be arranged stationary to cut the capsule open during a movement of the capsule.

According to an embodiment, the cutting element may be movable in translation. Thus, the cutting unit may be relatively compact.

In an implementation, the cutting element may be movable in translation along a direction that is transversal, preferably substantially perpendicular, to a direction along which a preparation chamber section moves to close or open the preparation chamber. Alternatively or additionally, the cutting element may be arranged to move in rotation or along a composite trajectory involving both translation and rotation.

The cutting element is arranged to pass at least partially through the preparation chamber. In other words, part or all of the cutting element may pass through a part or all of the preparation chamber.

Thus, the preparation machine may be relatively compact.

According to an embodiment, the preparation machine may further comprise a separation unit configured to let the opened capsule body separate from the beverage component released from the cavity.

Thus, the released beverage component can be handled, in particular composted or recycled, separately from the opened capsule body.

The separation unit may be arranged next to the cutting unit, preferably downstream the cutting unit such that a cut capsule may move from the cutting unit to the separation unit, for example by the action of gravity. Alternatively, the separation unit may be part of the cutting unit.

According to an embodiment, the separation unit may comprise a filtering grid configured to retain the opened capsule body and to let all or part of the beverage component released from the cavity pass through the filtering grid.

Thus, the filtering grid enables a quick separation of the opened capsule body from the released beverage component. The released beverage component, which is generally a flowable or pasty substance, can pass to one side of the filtering grid, while the opened capsule body remains on the other side of the filtering grid. The filtering grid can act like a solid/liquid filter.

Preferably, the filtering grid may have holes dimensioned to prevent chunks of the capsule body from passing through it. Thus, the filtering grid can act as a filter.

In an implementation, the filtering grid may be arranged below the cutting element such that the opened capsule body and the beverage component released from the cavity may fall respectively onto and through the filtering grid by the action of gravity.

In an implementation, the filtering grid may extend substantially horizontally, the released beverage component passing through the filtering grid preferably by the action of gravity. In addition, the separation unit may further comprise an assisting device configured to transmit vibrations or impacts to the filtering grid. Thus, the assisting device can increase the flowrate of the released beverage component in passing through the filtering grid.

According to an embodiment, the preparation machine may further comprise a collecting chamber for collecting the beverage component released from the cavity and the opened capsule body, preferably in separate sections of the collecting chamber, the collecting chamber being preferably part of the cutting unit or of the separation unit if present.

Thus, the collecting chamber enables the user to conveniently handle the released beverage component collected on the one section of the collecting chamber, and the opened capsule bodies on the other section of the collecting chamber.

Preferably, the cutting unit is not part of the preparation unit when the collecting chamber is part of the cutting unit.

In an implementation, the separate sections may be arranged side-by-side or, alternatively, atop one another. Each one of the separate sections may be formed by a receptacle that can be inserted in and removed from the preparation machine quickly and independently from the receptacle of the other section.

Alternatively to this embodiment, the preparation machine may store the released beverage component together with the opened capsule bodies in a common container. In this alternative, the user shall manually separate the opened capsule bodies from the released beverage component, for example by shaking the common container to promote density segregation.

According to an embodiment, the preparation machine may further comprise a transfer section configured to allow a defined transfer, preferably by the action of gravity, of the capsule from the preparation chamber to the cutting unit.

Thus, the capsule can automatically transit from the preparation unit to the cutting unit, which enhances the convenience for the user.

In an implementation, the transfer section may be a passage, which joins the preparation chamber to the cutting unit and which is oriented substantially vertically. The capsule may be transferred by simply falling through the passage. Thus, the passage forms a compact transfer section. Preferably, the passage may be an opening or a duct.

In an implementation, the cutting unit and the preparation unit are configured such that, when the cutting unit and the preparation unit are coupled, the capsule may be located at or displaced to, preferably by the action of gravity, a place in contact with the cutting element, for example after the capsule has been processed in the preparation unit.

According to an embodiment, the preparation chamber may be arranged above the separation unit if present and/or above the collection chamber if present, such that the opened capsule body and the beverage component released from the cavity can be transferred to the separation unit if present and/or to the collection chamber if present by the action of gravity.

According to an embodiment, the preparation unit may be detachably coupled to the cutting unit, to the separation unit if present, and/or to the collecting chamber if present.

Thus, the user can detach from and reattach to the preparation machine the cutting unit and the separation unit if present, in particular to dispose of the opened capsule body and of the released beverage component.

In an implementation, the preparation machine may have an accommodating space configured to accommodate most or all of the cutting unit and/or most or all of the separation unit if present. The accommodating space may be located in or adjacent the preparation unit, for example next to a side of the preparation unit. Alternatively, the accommodating space may be formed by a cavity located below, preferably under, the preparation unit.

In an implementation, the preparation machine may further comprise coupling means for detachably coupling the cutting unit and/or the separation unit, if present, to the preparation unit.

In an implementation, the cutting unit and/or the separation unit, if present, may be detached by translation out of the preparation unit.

In an implementation, the preparation machine may further comprise locking means configured to lock the cutting unit and/or the separation unit, if present, to the preparation unit. Thus, the locking means can prevent an unintended detachment of the cutting unit and/or the separation unit if present. The locking means may preferably be configured for reversible elastic snap-fitting of said units on one another.

According to an embodiment, the cutting unit may further comprise a cleaning device, the cleaning device being fluidly connected with the fluid injection unit, the cleaning device being configured to rinse the capsule body with some of the fluid after the capsule has been processed in the preparation unit, the cleaning device being arranged downstream the cutting unit.

Thus, the cleaning device can enhance removal of beverage component that might be stuck to or in the opened capsule body or pieces thereof.

In an implementation, the fluid injection unit may be further configured to inject fluid in the capsule when the capsule is in the preparation chamber so as to prepare the beverage. So the fluid injection unit can supply fluid for preparing a beverage. As the same fluid injection unit can be used both for preparing a beverage and for rinsing the capsule body, the overall footprint can be reduced.

According to an embodiment, the preparation machine may further comprise a dispensing unit for dispensing the beverage out of the preparation unit.

It is another aspect of the present disclosure to provide a cutting unit for being used in a preparation machine according to any one of the preceding aspect, embodiments and implementations, the cutting unit being configured to be coupled, preferably in a detachable manner, to the preparation unit such that the capsule may be transferred from the preparation chamber to the cutting unit, the cutting unit having i) the cutting element and ii) a drive connection for functionally connecting the cutting element with a or the driving unit of the preparation machine to selectively move the cutting element.

Thus, when the cutting unit is used in a preparation machine, the processed capsule can be cut by the cutting element to release most or all of the used beverage component from the cavity.

Still another aspect of the present disclosure is directed to a method for preparing a beverage according to claim 13.

After the capsule has been processed in the preparation unit, the capsule may be transferred from the preparation unit to the cutting unit.

Thus, when this method is carried out, the processed capsule can be cut open by the cutting element to release most or all of the used beverage component from the cavity. In the present disclosure, the relative terms "horizontal", "vertical", "below", "under", "bottom" and "top" generally refer to the configuration where the preparation machine is in service for preparing a beverage.

The words "comprise", "include", "have" and their derivatives are to be interpreted inclusively rather than exclusively. The term "and/or" used in the context of "X and/or Y" should be interpreted as "X," or "Y," or "X and Y."

### 4. Brief description of drawings

Further features, details and advantages of the present invention are described hereinafter, in particular in relation to the appended figures, which illustrate some of the afore-described aspects, embodiments and implementations thereof, and in which:
- Fig.1: shows a schematic cross-sectional view of a preparation machine including a cutting unit according to an embodiment to illustrate a step of preparing a beverage when the preparation chamber is closed;
- Fig.2: shows a view similar to Fig.1 to illustrate a step of reopening the preparation chamber shortly after the capsule has been processed in the preparation unit;
- Fig.3: shows a view similar to Fig.1 to illustrate a step where the cutting element is cutting the capsule open;
- Fig.4: shows a schematic cutaway perspective view, cut along the same plane as Fig.3, of the detail IV in Fig.3;
- Fig.5: shows a view similar to Fig.1 where the cut capsule is transferred to the collecting chamber;
- Fig.6: shows a schematic cutaway perspective view, cut along the same plane as Fig.5, of the detail VI in Fig.5;
- Fig.7: shows a view similar to Fig.1 to illustrate a step where the cut capsule body and the released beverage component fall into the collecting chamber, with the preparation chamber fully open;
- Fig.8: shows a view similar to Fig.1 to illustrate a final step after the cut capsule body and the released beverage component have reached the bottom of the collecting chamber, with the preparation chamber fully open;
- Fig.9: shows a flowchart of a method according to the present invention for preparing a beverage.

### 5. Detailed description

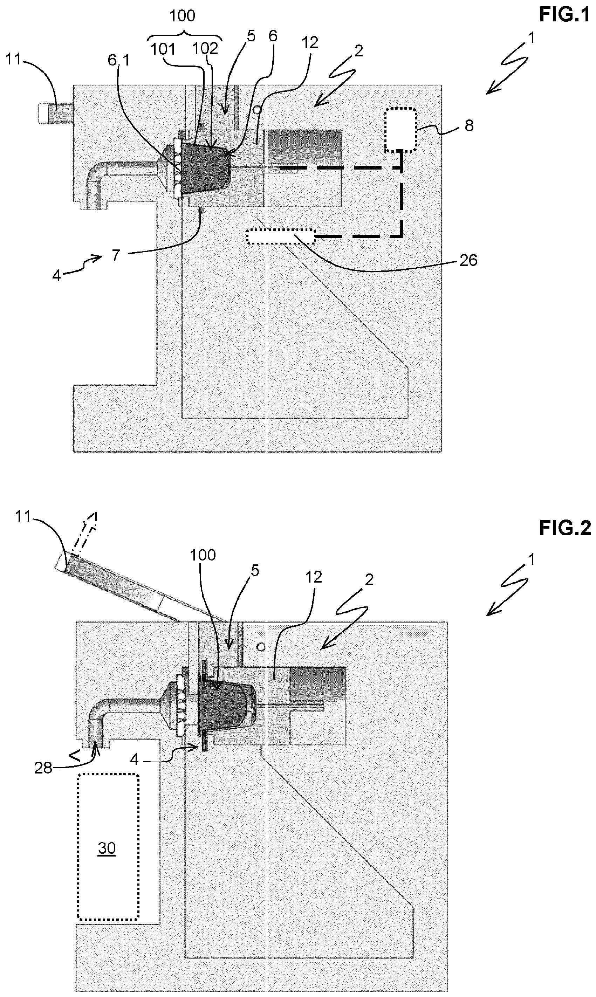

Figs.1-2 show a preparation machine 1 for preparing a beverage by injecting a fluid in a capsule 100. The preparation machine 1 may for example be of a Nespresso Essenza Mini^{®} or a Nespresso Pixie^{®}. The capsule 100 may for example be a Nespresso original^{®}.

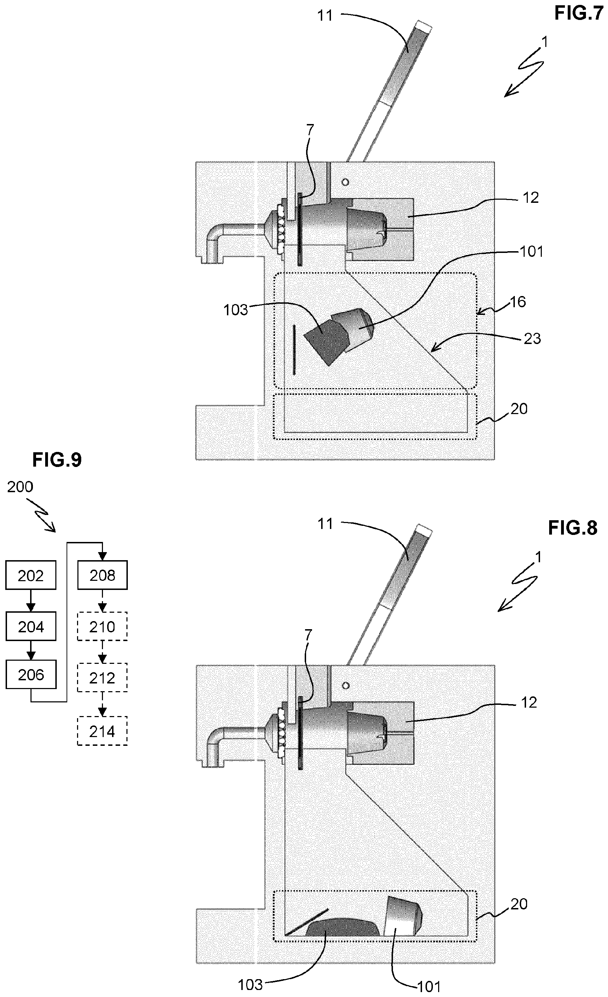

The capsule 100 has i) a capsule body 101 defining a cavity 102 and ii) a beverage component 103 (Figs.7-8) contained within the cavity 102. The beverage component 103 may be roast and ground coffee. The capsule body 101 may include a membrane 104 (Figs.7-8) configured to close the cavity 102.

The preparation machine 1 comprises a preparation unit 2 and a cutting unit 4. The cutting unit 4 may be located beside the preparation unit 2. As the cutting unit 4 is part of the preparation machine 1, it provides an all-in-one compact equipment for processing the capsules and enhancing their disposability and recyclability.

The preparation machine 1 may have an introduction duct 5 (Figs.1-2) for introducing the capsule 100 into the beverage preparation unit 2. The preparation unit 2 has a preparation chamber 6 (Figs.1-2), which is suitable for receiving the capsule 100. The preparation chamber 6 may include a pyramid plate 6.1 covered with sharp pyramids configured to tear open the membrane 104 (Figs.7-8) to let the prepared beverage flow out of the capsule 100.

The preparation unit 2 also has a fluid injection unit 8 (shown only in Fig.1), which may be configured for injecting the fluid in the capsule 100 to prepare the beverage when the capsule is in the preparation chamber 6. The fluid may be hot water under pressure. During preparation of a beverage (Fig.1), the beverage component 103 may be made to interact with the fluid injected in the capsule 100 in order to prepare a cup of coffee.

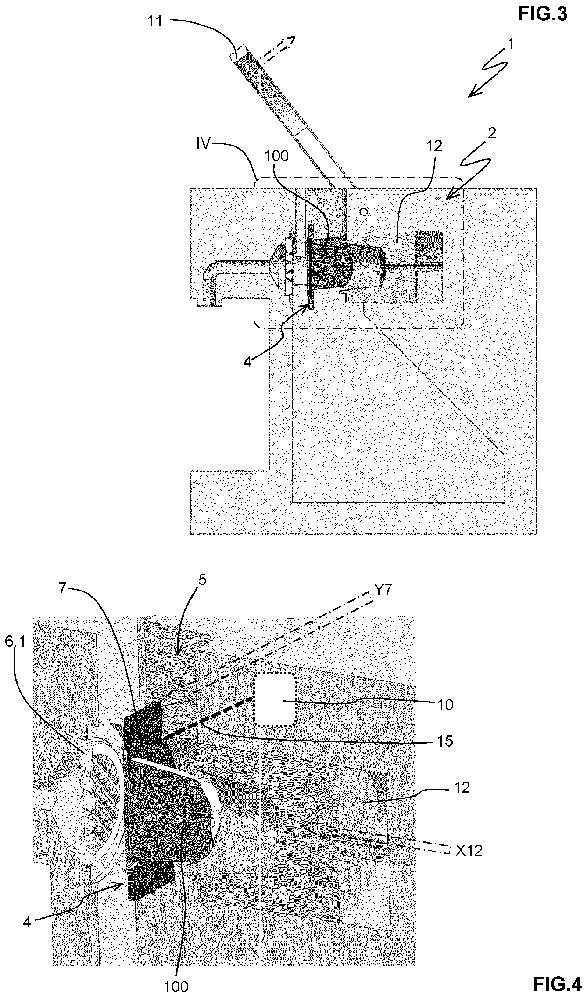

The cutting unit 4 has a cutting element 7. As visible in Fig.4, the cutting element 7 may comprise a blade, which may be substantially in the shape of a rectangle. As shown in Figs.3-4, the cutting element 7 is movable to cut the capsule 100 open, in order to release most or all of the beverage component 103 from the cavity 102 after the capsule 100 has been processed in the preparation unit 2.

In the example of Figs.1-8, the cutting element 7 may be movable in translation, herein along a cutting direction Y7 that is substantially perpendicular to the plane of Fig.3 and to an axis of symmetry of capsule 100. The cutting element 7 may be arranged to pass through the preparation chamber 6.

The cutting unit 4 may have a counter-wall (not shown), which is arranged opposite the cutting element 7 with respect to the capsule 100. Thus, the counter-wall can keep the capsule 100 in contact with the cutting element 7 while the capsule 100 is being cut by the cutting element 7.

In the example of Figs.1-8, the capsule 100 may be positioned at substantially the same location it occupies during beverage preparation in the preparation unit 2. The capsule 100 can be cut in two pieces, for example one including the membrane 104 and the other one including a main portion of the capsule body 101.

The preparation machine 1 may further comprise a driving unit 10 (shown only in Fig.4), which is configured to move the cutting element 7 in translation along the cutting direction Y7. The driving unit 10 may include a motor (not shown), which may be powered by the same source as the preparation unit 2 and the fluid injection unit 8.

The driving unit 10 may be mechanically connected with the cutting element 7 in order to transmit a mechanical force, possibly via a mechanism (not shown), to the cutting element 7. In turn, the cutting element 7 can cut the capsule 100 as shown in Fig.3-4.

Thus, when the cutting unit 4 is used in a preparation machine 1, the processed capsule 100 can be cut by the cutting element 7 to release most or all of the used beverage component 103 from the cavity 102.

The preparation machine 1 may further comprise a crank 11 which may be coupled to the preparation unit 2, so as to manually displace a movable chamber section 12, and thus selectively open or close the preparation chamber 6. As shown in Fig.4 the cutting direction Y7 may be substantially perpendicular to the direction X12 along which the movable chamber section 12 is displace to close or open the preparation chamber 6.

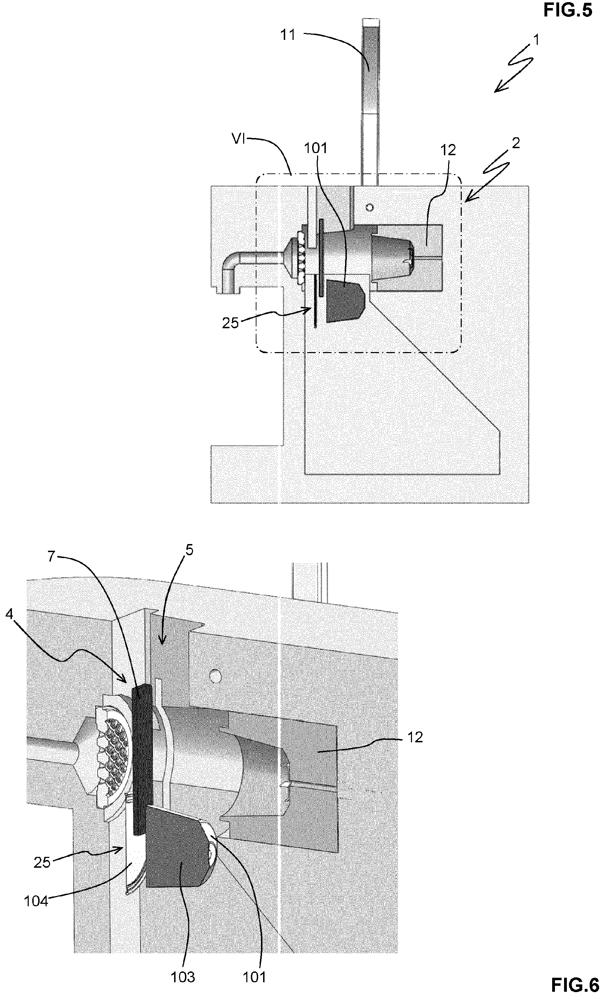

In Fig.1 the crank 11 is horizontally placed in a first end position as the movable chamber section 12 is closing the preparation chamber 6. In Figs.2, 3 and 4 the crank 11 is placed in intermediate positions as the preparation chamber 6 is reopened partly (Fig.2) and then fully (Figs.3-4). In Figs.5-6 the crank 11 is in a vertical position as the preparation chamber 6 is fully open. In Figs.7-8 the crank 11 is placed in a second end position past the vertical position of Figs.5-6, which may trigger the return of the blade back towards its initial position. In Figs.7-8 the movable chamber section 12 is fully retracted, hence the preparation chamber 6 is fully open.

As shown in Fig.4 the cutting unit 4 may further have a drive connection 15 functionally connecting the cutting element 7 with the driving unit 10 to selectively move the cutting element 7, here in translation along the cutting direction Y12.

As shown in Figs.7-8, in addition to the cutting unit 4, the preparation machine 1 may comprise a separation unit 16, which is configured to let the opened capsule body 101 separate from the released beverage component 103. The separation unit 16 can receive the opened capsule 101 and the beverage component 103 from the cutting unit 4. In the example of Figs.1-8, the opened capsule body 101 may separate from the released beverage component 103 simply by the action of gravity, while falling through the separation unit 16.

As shown in Figs.7-8 the preparation machine 1 may further comprise a collecting chamber 20 configured for collecting the released beverage component 103 and the cut capsule body 101 together, the collecting chamber 20 thus forming a common container. As the cutting element 7 cut through the capsule body 101 to cut the capsule 100 open, the capsule body 101 may be separated in two pieces, which roughly correspond to the membrane 104 and to the rest of capsule body 101. The cavity 102 can be emptied and the beverage component 103 can be separated from the opened capsule body 101.

In the example of Figs.1-8, the collecting chamber 20 may be located below the separation unit 16. The collecting chamber 20 may be integral with the separation unit 16, so the user can conveniently detach and reattach them altogether. Thus, the user can conveniently handle the released beverage component 103 and the cut capsule body 101, and then empty the collecting chamber 20.

The preparation unit 2 may be detachably coupled to the separation unit 16 and the collecting chamber 20. The cutting unit 4, the separation unit 16 and/or the collecting chamber 20 may be detached from the preparation unit 2 by translation parallel to closing direction X12.

The cutting unit 4 may have a slot (not shown) configured to accommodate partly or totally the cutting element 7. The slot may have a shape complementary to the shape of the cutting element 7, with some clearance.

The cutting unit 4 may be accommodated in the preparation unit 2. The preparation machine 2 may have an accommodating space 23 for accommodating most or all of the separation unit 16 and of the collecting chamber 20. The accommodating space 23 may be formed by a cavity located under the preparation unit 2.

The preparation machine 1 may further comprise coupling means (not shown) for detachably coupling the cutting unit 4 and/or the separation unit 16 to the preparation unit 2. The preparation machine 1 may further comprise locking means (not shown) for locking the cutting unit 4 and/or the separation unit 16 to the preparation unit 2. The locking means may preferably be configured for reversible elastic snap-fitting of said units on one another.

As shown in Figs.5-6 the preparation machine 1 may further comprise a transfer section 25 for allowing a transfer, by the action of gravity, of the capsule 100 from the preparation chamber 2 to the separation unit 16. In Figs.5-6 the capsule 100 is passing through the transfer section 25. The transfer section 25 may be a passage, which is joining the preparation chamber 6 to the separation unit 16 and which is oriented substantially vertically. After the preparation chamber 6 is fully open, the processed and cut capsule 100 is free to fall through transfer section 25 and into the separation unit 16.

The cutting unit 4 may further comprise a cleaning device 26 (shown only in Fig.1) for rinsing the capsule body 101 with fluid after the capsule 100 has been processed in the preparation unit 2. The cleaning device 26 can enhance removal of beverage component 103 from the opened capsule 101. The cleaning device 26 may be fluidly connected with the fluid injection unit 8 for a supply of fluid, for example water. The cleaning device 26 may be arranged downstream the cutting unit 4. The collecting chamber 20 may be configured to collect also the rinsing fluid after the rinsing has been carried out.

In addition or alternatively to the cleaning device 26, the preparation machine 1 may further comprise a drying module (not shown) configured for partly or totally dry out the beverage component. The drying module may be part of the separation unit 16. Thus, the drying module can enhance the separation of the beverage component 103 from the capsule body 101.

The preparation machine 1 may further comprise a dispensing unit 28 for dispensing the beverage out of the preparation unit 2. The dispensing unit 28 may be fluidly connected with the preparation chamber 6 and have a duct for guiding the beverage out of the preparation machine 1. The dispensing unit 28 may further have a filling space 30 where a drinking cup of a user may be placed such that the beverage can be dispensed therein. The filling space 30 may be located in front of the separation unit 16.

The collecting chamber 20 may further comprise level sensors (not shown), which are configured to issue respective signals representing the (full) level of beverage component 103 and of pieces of capsule body 101 in the collecting chamber 20. Upon receiving such signals the user can detach the collecting chamber 20 (or the whole separation unit 16), empty it, and then reattach it to the preparation unit 2.

When the preparation machine 1 is in service, it can be operated to prepare a beverage according to a method 200 illustrated in Fig.13. The method 200 comprises:
- 202) receiving a capsule 100 in the preparation chamber 6,
- 204) preparing a beverage by injecting the fluid in the capsule 100 such that the fluid interacts with the beverage component 103,
- 206) preferably, transferring the capsule 100, via the transfer section 25, from the preparation unit 2 to the cutting unit 4 after the capsule 100 has been processed in the preparation unit 2, and
- 208) let the cutting element 7 cut the capsule 100 open such that at least part of the beverage component 103 is released from the cavity 102.

The user can thus easily handle the released beverage component 103 separately from the opened capsule 100. The disposability and recyclability of processed capsules 100 is enhanced. For example, the beverage component 103 can be composted at home.

Further, the method 200 may further comprise:
- 210) separating, by means of separation unit 16, the opened capsule 101 from the released beverage component 103, wherein the separation unit 16 may be located downstream the cutting unit 4;
- 212) actuating a cleaning device 26 to rinse the opened capsule body 101 by means of fluid; and
- 214) collecting in the collecting chamber 20 the released beverage component 103 and the opened capsule body 101.

As long as the present invention remains covered by the appended claims, the present invention is not limited to the afore-described aspects, embodiments and implementations, most of which may be combined.

## Claims

1. Preparation machine (1) for preparing a beverage by injecting a fluid in a capsule (100), the capsule (100) having i) a capsule body (101) defining a cavity (102) and ii) a beverage component (103) contained within the cavity (102), wherein the preparation machine (1) comprises:
- a preparation unit (2) having i) a preparation chamber (6) for receiving the capsule (100) and ii) a fluid injection unit (8) for injecting the fluid in the capsule (100) to prepare the beverage, and
- a cutting unit (4) having a cutting element (7), the cutting element (7) being configured to cut the capsule (100) open after the capsule (100) has been processed in the preparation unit (2)
**characterized in that** the cutting element (7) is arranged to pass at least partially through the preparation chamber (6), said cutting element being further configured to cut through the capsule body to cut the capsule open and separate it in two pieces such that most or all, or at least part of the used beverage component is released from the cavity after the capsule has been processed in the preparation unit.

2. Preparation machine (1) according to claim 1, wherein the cutting element (7) comprises a blade.

3. Preparation machine (1) according to any one of the preceding claims, further comprising a driving unit (10) configured to move the cutting element (7) to cut open the capsule (100), the driving unit (10) including a motor or a manual actuator.

4. Preparation machine (1) according to any one of the preceding claims, wherein the cutting element (7) is movable in translation.

5. Preparation machine (1) according to any one of the preceding claims, further comprising a separation unit (16) configured to let the opened capsule body (101) separate from the beverage component (103) released from the cavity (102).

6. Preparation machine (1) according to claim 5, wherein the separation unit (16) comprises a filtering grid (18) configured to retain the opened capsule body (101) and to let all or part of the beverage component (103) released from the cavity (102) pass through the filtering grid (18).

7. Preparation machine (1) according to any one of the preceding claims, further comprising a collecting chamber (20) for collecting the beverage component (103) released from the cavity (102) and the opened capsule body (101), preferably in separate sections (21, 22) of the collecting chamber (20), the collecting chamber (20) being preferably part of the cutting unit (4) or of the separation unit (16) if present.

8. Preparation machine (1) according to any one of the preceding claims, further comprising a transfer section (25) configured to allow a defined transfer, preferably by the action of gravity, of the capsule (100) from the preparation chamber (6) to the cutting unit (4).

9. Preparation machine (1) according to any one of claims 5 to 8, wherein the preparation chamber (2) is arranged above the separation unit (16) if present and/or above the collection chamber (20) if present, such that the opened capsule body (101) and the beverage component (103) released from the cavity (102) can be transferred to the separation unit (16) if present and/or to the collection chamber (20) if present by the action of gravity.

10. Preparation machine (1) according to any one of the preceding claims, wherein the preparation unit (2) is detachably coupled to the cutting unit (4), to the separation unit (16) if present, and/or to the collecting chamber (20) if present.

11. Preparation machine (1) according to any one of the preceding claims, wherein the cutting unit (4) further comprises a cleaning device (26), the cleaning device (26) being fluidly connected with the fluid injection unit (8), the cleaning device (26) being configured to rinse the opened capsule body (101) with some of the fluid after the capsule (100) has been processed in the preparation unit (2), the cleaning device (26) being arranged downstream the cutting unit (4).

12. Preparation machine (1) according to any one of the preceding claims, further comprising a dispensing unit (28) for dispensing the beverage out of the preparation unit (2).

13. Method (200) for preparing a beverage with a preparation machine (1) according to any one of claims 1 to 13, the method (200) comprising:
- 202) receiving a capsule (100) in the preparation chamber (6),
- 204) preparing a beverage by injecting the fluid in the capsule (100) such that the fluid interacts with the beverage component (103),
- 208) let the cutting element (7) cut the capsule (100) open such that at least part of the beverage component (103) is released from the cavity (102),
**characterized in that** it further comprises:
- passing the cutting element (7) at least partially through the preparation chamber (6), said cutting element being configured to cut through the capsule body to cut the capsule open, and
- separating the open capsule in two pieces such that most or all, or at least part of the used beverage component is released from the cavity after the capsule has been processed in the preparation unit.

14. Method according to claim 13, which further comprises, prior to step 208), the step 206) of transferring the capsule (100) from the preparation unit (2) to the cutting unit (4) after the capsule (100) has been processed in the preparation unit (2).

## Patentansprüche

1. Zubereitungsmaschine (1) zum Zubereiten eines Getränks durch Einspritzen eines Fluids in eine Kapsel (100), wobei die Kapsel (100) i) einen Kapselkörper (101), der einen Hohlraum (102) definiert, und ii) eine Getränkekomponente (103), die innerhalb des Hohlraums (102) enthalten ist, aufweist, wobei die Zubereitungsmaschine (1) umfasst:
- eine Zubereitungseinheit (2), die i) eine Zubereitungskammer (6) zum Aufnehmen der Kapsel (100) und ii) eine Fluideinspritzeinheit (8) zum Einspritzen des Fluids in die Kapsel (100), um das Getränk zuzubereiten, aufweist, und
- eine Schneideinheit (4), die ein Schneidelement (7) aufweist, wobei das Schneidelement (7) konfiguriert ist, um die Kapsel (100) aufzuschneiden, nachdem die Kapsel (100) in der Zubereitungseinheit (2) verarbeitet wurde
**dadurch gekennzeichnet, dass** das Schneidelement (7) angeordnet ist, um mindestens teilweise durch die Zubereitungskammer (6) hindurchzugehen, wobei das Schneidelement ferner konfiguriert ist, um durch den Kapselkörper zu schneiden, um die Kapsel aufzuschneiden und ihn in zwei Teile derart zu trennen, dass der Großteil oder die Gesamtheit oder mindestens ein Teil der verbrauchten Getränkekomponente aus dem Hohlraum freigesetzt wird, nachdem die Kapsel in der Zubereitungseinheit verarbeitet wurde.

2. Zubereitungsmaschine (1) nach Anspruch 1, wobei das Schneidelement (7) eine Klinge umfasst.

3. Zubereitungsmaschine (1) nach einem der vorstehenden Ansprüche, ferner umfassend eine Antriebseinheit (10), die konfiguriert ist, um das Schneidelement (7) zu bewegen, um die Kapsel (100) aufzuschneiden, wobei die Antriebseinheit (10) einen Motor oder einen manuellen Stellantrieb einschließt.

4. Zubereitungsmaschine (1) nach einem der vorstehenden Ansprüche, wobei das Schneidelement (7) translatorisch beweglich ist.

5. Zubereitungsmaschine (1) nach einem der vorstehenden Ansprüche, ferner umfassend eine Trenneinheit (16), die konfiguriert ist, um den geöffneten Kapselkörper (101) von der Getränkekomponente (103), die aus dem Hohlraum (102) freigesetzt wird, zu trennen.

6. Zubereitungsmaschine (1) nach Anspruch 5, wobei die Trenneinheit (16) ein Filtergitter (18), das konfiguriert ist, um den geöffneten Kapselkörper (101) zurückzuhalten und um die Gesamtheit oder einen Teil der Getränkekomponente (103), die aus dem Hohlraum (102) freigesetzt wird, durch das Filtergitter (18) hindurchgehen zu lassen, umfasst.

7. Zubereitungsmaschine (1) nach einem der vorstehenden Ansprüche, ferner umfassend eine Auffangkammer (20) zum Auffangen der Getränkekomponente (103), die aus dem Hohlraum (102) freigesetzt wird, und des geöffneten Kapselkörpers (101), vorzugsweise in getrennten Abschnitten (21, 22) der Auffangkammer (20), wobei die Auffangkammer (20) vorzugsweise Teil der Schneideinheit (4) oder der Trenneinheit (16), falls vorhanden, ist.

8. Zubereitungsmaschine (1) nach einem der vorstehenden Ansprüche, ferner umfassend einen Transferabschnitt (25), der konfiguriert ist, um einen definierten Transfer, vorzugsweise durch die Wirkung von Schwerkraft, der Kapsel (100) von der Zubereitungskammer (6) zu der Schneideinheit (4) zu ermöglichen.

9. Zubereitungsmaschine (1) nach einem der Ansprüche 5 bis 8, wobei die Zubereitungskammer (2) oberhalb der Trenneinheit (16), falls vorhanden, und/oder oberhalb der Auffangkammer (20), falls vorhanden, derart angeordnet ist, dass der geöffnete Kapselkörper (101) und die Getränkekomponente (103), die aus dem Hohlraum (102) freigesetzt wird, durch die Wirkung der Schwerkraft zu der Trenneinheit (16), falls vorhanden, und/oder zu der Auffangkammer (20), falls vorhanden, transferiert werden können.

10. Zubereitungsmaschine (1) nach einem der vorstehenden Ansprüche, wobei die Zubereitungseinheit (2) mit der Schneideinheit (4), der Trenneinheit (16), falls vorhanden, und/oder der Auffangkammer (20), falls vorhanden, lösbar gekoppelt ist.

11. Zubereitungsmaschine (1) nach einem der vorstehenden Ansprüche, wobei die Schneideinheit (4) ferner eine Reinigungsvorrichtung (26) umfasst, wobei die Reinigungsvorrichtung (26) mit der Fluideinspritzeinheit (8) fluidisch verbunden ist, wobei die Reinigungsvorrichtung (26) konfiguriert ist, um den geöffneten Kapselkörper (101) mit einem Teil des Fluids zu spülen, nachdem die Kapsel (100) in der Zubereitungseinheit (2) verarbeitet wurde, wobei die Reinigungsvorrichtung (26) stromabwärts der Schneideinheit (4) angeordnet ist.

12. Zubereitungsmaschine (1) nach einem der vorstehenden Ansprüche, ferner umfassend eine Abgabeeinheit (28) zum Abgeben des Getränks aus der Zubereitungseinheit (2).

13. Verfahren (200) zum Zubereiten eines Getränks mit einer Zubereitungsmaschine (1) nach einem der Ansprüche 1 bis 13, das Verfahren (200) umfassend:
- 202) Aufnehmen einer Kapsel (100) in der Zubereitungskammer (6),
- 204) Zubereiten eines Getränks durch derart Einspritzen des Fluids in die Kapsel (100), dass das Fluid mit der Getränkekomponente (103) interagiert,
- 208) Zulassen, dass das Schneidelement (7) die Kapsel (100) derart aufschneidet, dass mindestens ein Teil der Getränkekomponente (103) aus dem Hohlraum (102) freigesetzt wird,
**dadurch gekennzeichnet, dass** es ferner umfasst:
- Führen des Schneidelements (7) mindestens teilweise durch die Zubereitungskammer (6), wobei das Schneideelement konfiguriert ist, um durch den Kapselkörper zu schneiden, um die Kapsel aufzuschneiden, und
- Trennen der geöffneten Kapsel in zwei Teile, derart, dass der Großteil oder die Gesamtheit oder mindestens ein Teil der verbrauchten Getränkekomponente aus dem Hohlraum freigesetzt wird, nachdem die Kapsel in der Zubereitungseinheit verarbeitet wurde.

14. Verfahren nach Anspruch 13, das ferner vor Schritt 208) den Schritt 206) des Transferierens der Kapsel (100) von der Zubereitungseinheit (2) zu der Schneideinheit (4), nachdem die Kapsel (100) in der Zubereitungseinheit (2) verarbeitet worden ist, umfasst.

## Revendications

1. Machine de préparation (1) permettant de préparer une boisson en injectant un fluide dans une capsule (100), la capsule (100) ayant i) un corps de capsule (101) définissant une cavité (102) et ii) un composant de boisson (103) contenu à l'intérieure de la cavité (102), dans laquelle la machine de préparation (1) comprend :
- une unité de préparation (2) ayant i) une chambre de préparation (6) destinée à recevoir la capsule (100) et ii) une unité d'injection de fluide (8) destinée à injecter le fluide dans la capsule (100) pour préparer la boisson, et
- une unité de découpe (4) ayant un élément de découpe (7), l'élément de découpe (7) étant conçu pour ouvrir la capsule (100) après que la capsule (100) a été traitée dans l'unité de préparation (2)
**caractérisée en ce que** l'élément de découpe (7) est agencé pour traverser au moins partiellement la chambre de préparation (6), ledit élément de découpe étant en outre conçu pour découper à travers le corps de capsule afin d'ouvrir la capsule et la séparer en deux morceaux de telle sorte que la majeure partie ou la totalité, ou au moins une partie, du composant de boisson usagé soit libérée de la cavité après que la capsule a été traitée dans l'unité de préparation.

2. Machine de préparation (1) selon la revendication 1, dans laquelle l'élément de découpe (7) comprend une lame.

3. Machine de préparation (1) selon l'une quelconque des revendications précédentes, comprenant en outre une unité d'entraînement (10) conçue pour déplacer l'élément de découpe (7) afin d'ouvrir la capsule (100), l'unité d'entraînement (10) comportant un moteur ou un actionneur manuel.

4. Machine de préparation (1) selon l'une quelconque des revendications précédentes, dans laquelle l'élément de découpe (7) peut être déplacé en translation.

5. Machine de préparation (1) selon l'une quelconque des revendications précédentes, comprenant en outre une unité de séparation (16) conçue pour séparer le corps de capsule (101) ouvert du composant de boisson (103) libéré de la cavité (102).

6. Machine de préparation (1) selon la revendication 5, dans laquelle l'unité de séparation (16) comprend une grille de filtrage (18) conçue pour retenir le corps de capsule (101) ouvert et pour laisser passer la majeure partie ou la totalité du composant de boisson (103) libéré de la cavité (102) à travers la grille de filtrage (18).

7. Machine de préparation (1) selon l'une quelconque des revendications précédentes, comprenant en outre une chambre de collecte (20) destinée à collecter le composant de boisson (103) libéré de la cavité (102) et le corps de capsule (101) ouvert, de préférence dans des sections séparées (21, 22) de la chambre de collecte (20), la chambre de collecte (20) faisant de préférence partie de l'unité de découpe (4) ou de l'unité de séparation (16), si elle est présente.

8. Machine de préparation (1) selon l'une quelconque des revendications précédentes, comprenant en outre une section de transfert (25) conçue pour permettre un transfert défini, de préférence par l'action de gravité, de la capsule (100) à partir de la chambre de préparation (6) à l'unité de découpe (4).

9. Machine de préparation (1) selon l'une quelconque des revendications 5 à 8, dans laquelle la chambre de préparation (2) est disposée au-dessus de l'unité de séparation (16), si elle est présente, et/ou au-dessus de la chambre de collecte (20), si elle est présente, de sorte que le corps de capsule (101) ouvert et le composant de boisson (103) libéré de la cavité (102) peuvent être transférés vers l'unité de séparation (16), si elle est présente, et/ou à la chambre de collecte (20), si elle est présente, par l'action de la gravité.

10. Machine de préparation (1) selon l'une quelconque des revendications précédentes, dans laquelle l'unité de préparation (2) est accouplée de manière détachable à l'unité de découpe (4), à l'unité de séparation (16), si elle est présente, et/ou à la chambre de collecte (20), si elle est présente.

11. Machine de préparation (1) selon l'une quelconque des revendications précédentes, dans laquelle l'unité de découpe (4) comprend en outre un dispositif de nettoyage (26), le dispositif de nettoyage (26) étant relié fluidiquement à l'unité d'injection de fluide (8), le dispositif de nettoyage (26) étant conçu pour rincer le corps de capsule (101) ouvert avec une partie du fluide après que la capsule (100) a été traitée dans l'unité de préparation (2), le dispositif de nettoyage (26) étant agencé en aval de l'unité de découpe (4).

12. Machine de préparation (1) selon l'une quelconque des revendications précédentes, comprenant en outre une unité de distribution (28) destinée à distribuer la boisson hors de l'unité de préparation (2).

13. Procédé (200) permettant de préparer une boisson avec une machine de préparation (1) selon l'une quelconque des revendications 1 à 13, le procédé (200) comprenant :
- 202) la réception d'une capsule (100) dans la chambre de préparation (6),
- 204) la préparation d'une boisson en injectant le fluide dans la capsule (100) de telle sorte que le fluide interagit avec le composant de boisson (103),
- 208) le fait de laisser l'élément de découpe (7) ouvrir la capsule (100) de telle sorte qu'au moins une partie du composant de boisson (103) est libéré de la cavité (102),
**caractérisé en ce qu'**il comprend en outre :
- le passage de l'élément de découpe (7) au moins partiellement à travers la chambre de préparation (6), ledit élément de découpe étant conçu pour découper à travers le corps de capsule afin d'ouvrir la capsule, et
- la séparation de la capsule ouverte en deux morceaux de telle sorte que la majeure partie ou la totalité, ou au moins une partie, du composant de boisson usagé est libéré de la cavité après que la capsule a été traitée dans l'unité de préparation.

14. Procédé selon la revendication 13, qui comprend en outre, avant l'étape 208), l'étape 206) consistant à transférer la capsule (100) de l'unité de préparation (2) à l'unité de découpe (4) après que la capsule (100) a été traitée dans l'unité de préparation (2).
